# EUROPEAN PATENT APPLICATION

(11) **EP 3 696 756 A1**
(43) Date of publication of application: **19.08.2020**
(21) Application number: 20156981.1
(22) Date of filing: 12.02.2020
(51) Int. Cl.: G06Q 10/08, G06Q 10/04, G06Q 30/00, G06Q 50/28

(54) **SYSTEM FOR TRACKING THE POSITION OF ARTICLES, PARTICULARLY IN A RETAIL OUTLET**

(30) Priority: 15.02.2019 IT 201900002201
(71) Applicant: Nicolis, Stefano, 37069 Villafranca di Verona (VR) (IT)
(72) Inventor: Nicolis, Stefano, 37069 Villafranca di Verona (VR) (IT)

(57) **Abstract**

This invention relates to a system (10) for tracking the position of articles (80), particularly in a sales outlet, comprising at least a shelf (14) extending longitudinally that is suitable for supporting and displaying the articles (80), a central processing device (30) and a mobile processing device (50) operated by a user (90). The system (10) comprises a longitudinal light strip (16) associated with the at least one shelf (14), where the light strip (16) includes a number of LED arrays (18) and a transceiver configured to receive an activation command for at least one LED array (18) coming from the central processing device (30), where the light strip (16) includes a number of positional codes (20), each positional code (20) comprising an identifier for the light strip (16) and a longitudinal coordinate fixing the position of the positional code (20) along the light strip (16), the positional code (20) being associated with at least one respective
LED (18) array of the light strip (16). The mobile processing device (50) includes code reading devices (54) configured to read or scan both the positional code (20) of the light strip (16) associated with the at least one shelf (14), and a barcode of the article (80), and a transceiver (56) configured to transmit both the positional code (20) and the barcode of the article (80) to the central processing device (30). The central processing device (30) consists of a data entry module (38) configured to generate information about the association between the article (80), uniquely identified by the respective barcode, and an area of the at least one shelf (14) on which the article (80) has been positioned, uniquely identified by the positional code (20), and a transceiver (34) configured to transmit the activation command of at least one LED array (18) to the light strip (16), following the selection of the article (80) via the mobile processing device (50) or a selection device.

## Description

This invention relates to a system for tracking the position of articles in particular, though not exclusively, which is useful and practical in the field of the management and possible sharing of information relating to the position of various types of commercial products on shelving units in a retail store, namely inside a shop or a sales outlet.

In this description, the term "article" indicates any product or item of goods available in any sales outlet, offered to potential buyers and suitable for satisfying individual, family or business needs. More generally, the term "article" means any object available in any space, such as a library, a warehouse, and so on, offered to potential recipients, and also in this case suitable for satisfying individual, family or business needs.

Nowadays, there is an increasingly widespread tendency in the commercial sector to reproduce in "physical" stores, namely in sales outlets, an interactive shopping experience similar to that which the buyer, or the potential buyer, experiences when browsing in "virtual" online stores.

In this context, an important aspect is the management of the planogram of the articles, where the planogram is a diagram or model that indicates the position of commercial products on the shelving units of a shop. In fact, it is well known that the owners of the various brands sign agreements and pay large retail chains to have their product in so-called "hot" areas of the shop and arranged in a certain way, for example at a certain height on the shelving unit and/or near other products. For this reason, large retail chains need to manage and enforce the indications on the planogram in their various sales outlets, which are the result of agreements with the aforementioned brand owners.

Another important aspect consists in letting both seller users, such as store managers, shop assistants, and so on, and buyer users know where a commercial product is located, namely its position, in order to find it quickly if needed. In particular, knowing precisely the position of a commercial product is crucially important for the seller user who must organise the stocking of the items on the shelves on the logistic level.

Another important aspect is being able to quickly find more detailed information, including typically the sale price, relating to the commercial products available within the store.

Currently, it is well known that physical stores use electronic labels, displays on which static images, audiovisual content and/or product information appear, or even totems that allow the buyer to look for information, including also the position in a store, relating to the products they are interested in.

It is equally well known that physical stores use geolocation systems for the position of commercial products, typically using electronic geolocation devices associated with the products, which allow the buyer to search for the position of the products they are interested in, for example including on the shelves.

However, these solutions are not free from drawbacks, including the fact that they in no way allow commercial operators, i.e. seller users, to manage the planogram of the products available, neither at the level of the individual stores nor at the headquarters of the large retail chains.

Another drawback of the known solutions consists in the fact that they do not provide a sufficiently speedy exchange of information relating to the products, and therefore they do not offer the buyer user a degree of interactivity in the shopping experience similar to that provided in virtual stores.

A further drawback of the known solutions consists in the fact that they require an excessively laborious configuration process, typically requiring the navigation of complex menus, with the commercial operators, namely the seller users, losing valuable time as a result.

Furthermore, a disadvantage of these solutions, especially the above-mentioned geolocation systems, consists in the fact that they involve a degree of imprecision regarding the position of a product, making them too inexact for this type of application.

### Object of invention

The central task of this invention is to overcome the limits of the prior art set out above, by devising a system for tracking the position of articles, particularly in a store, which is as accurate as possible, thus allowing both the seller user (e.g. for managing the restocking of the shelves) and the buyer user to know exactly the position of the products they are interested in, particularly in a store, for example including shelves.

With regard to this task, one object of this invention is to devise a system for tracking the position of articles, particularly in a store, which can increase the convergence between the physical store and the virtual store, consequently increasing the degree of interactivity both of the management of the planogram and the information about the items for a seller user, and the purchasing experience of the buyer user in a physical store, or more generally in a physical place.

Another object of this invention is to devise a system for tracking the position of articles, particularly in a store, which allows you to facilitate the management of the information about the articles in the physical store, or more generally in the physical place, and also the position of the items inside the physical store, or more generally their physical location, in order to provide a quick search and identification of the location.

A further object of this invention is to devise a system for tracking the position of items, particularly in a store, which allows you to speed up the exchange of information relating to the products inside a physical store, or more generally inside a physical place.

Another object of this invention is to devise a system for tracking the position of articles, particularly in a store, which allows the shelving units to be kept in order, in particular their shelves, while at the same time providing the buyer user with information relating to the products, designed to provide incentives for their sale.

Yet another object of this invention is to make available a system for tracking the position of articles, particularly in a store, which is simple and quick to use, i.e. user-friendly.

An equally important object of this invention is to make available a system for tracking the position of articles, particularly in a store, which is highly reliable, relatively simple to manufacture, and that is competitively priced when compared to the prior art.

### The invention

This object, as well as these and other objects which will become more apparent hereinafter, are achieved by a system for tracking the position of articles, particularly in a store, comprising at least a shelf extending longitudinally that is suitable for supporting and displaying said articles, a central processing device and a mobile processing device operated by a user, where said central processing device and said mobile processing device are connected and communicating via a telematic communication network;
characterised by the fact that it includes a longitudinal light strip associated with at least one shelf and arranged parallel to a longitudinal axis of at least one shelf, where said light strip includes multiple LED arrays, a LED array 18 comprising one or more LEDs, and a transceiver configured to receive an activation command of at least one LED array coming from said central processing device, using said telematic communication network, where said light strip comprises a multiplicity of positional codes, where each positional code includes an identifier of said light strip and a longitudinal coordinate establishing the position of said positional code along said light strip, where said positional code of said light strip is associated with at least one respective LED array of said light strip;
said mobile processing device includes code reading devices configured to read or scan both said positional code of said light strip associated with said at least one shelf as well as a barcode of an article, and a transceiver configured to transmit both said positional code and said barcode of said article to said central processing device; and said central processing device includes a data entry module configured to generate information about the association between said article, uniquely identified by said respective barcode, and an area of said at least one shelf on which said article has been placed, uniquely identified by said positional code comprising said identification code of said light strip associated to said at least one shelf and said longitudinal coordinate which defines the position of said positional code along said light strip, and a transceiver configured to transmit said activation command of at least one LED array to said light strip, using said telematic communication network, following the selection of said article through said mobile processing device or a selection device.

Further characteristics and advantages of the invention will become more apparent from the description of a preferred, but not exclusive, embodiment of the system for tracking the position of articles, particularly in a store, according to the invention, given by way of a non-limiting example with the aid of the attached drawings, in which:
figure 1 is a first schematic view illustrating an embodiment of the system for tracking the position of articles, particularly in a retail store, according to this invention;
figure 2 is a second schematic view partially showing an embodiment of the system for tracking the position of articles, particularly in a retail store, according to this invention;
figure 3 is a third schematic view illustrating an embodiment of the system for tracking the position of articles, particularly in a retail store, according to this invention;
figure 4 is a block diagram that schematically illustrates the mobile processing device of an embodiment of the system for tracking the position of articles, particularly in a retail store, according to this invention;
figure 5 is a block diagram that schematically illustrates the central processing device of an embodiment of the system for tracking the position of articles, particularly in a retail store, according to this invention.

With reference to the figures shown, the system for tracking the position of articles, particularly in a retail store, according to the invention, indicated globally with the reference number 10, essentially consists of at least a shelf 14 suitable for supporting and displaying the articles 80, typically commercial products, a light strip 16 associated with the at least one shelf 14, a central processing device 30, and a mobile processing device 50, for example a smartphone or tablet, operated by a user 90, typically a seller or buyer.

The central processing device 30 and the mobile processing device 50 are mutually connected and communicating via a telematic communication network 25, such as for example a local wireless network or the Internet.

The shelf 14 extends longitudinally, is essentially horizontal, and is typically found inside a store. In a preferred embodiment of the system 10 according to the invention, the shelf 14 is part of a shelving unit 12 inside the store. In another embodiment of the system 10 according to the invention, the shelf 14 is part of a display case inside the store.

The light strip 16 of the system 10 for tracking the position of articles 80, particularly in a store, is uniquely identified by a respective identification code. The light strip 16 extends horizontally and is connected to the shelf 14. In particular, the light strip 16 is parallel to a longitudinal axis of the shelf 14, preferably along the front edge of the shelf 14. In an embodiment of the system 10 according to the invention, the light strip 16 can be in the form of an adhesive tape or a mount for attaching electronic labels, in both cases to be fixed preferably along the front edge of the shelf 14. In another embodiment of the system 10 according to the invention, the light strip 16 is fixed or incorporated directly along the front edge of the shelf 14.

The light strip 16 comprises a number of LED arrays 18, where a LED array 18 consists of one or more LEDs (Light Emitting Diode. Each LED array 18 can be activated individually by the central processing device 30 and, optionally, by the mobile processing device 50, by means of a suitable activation command. The LED arrays 18 are positioned along the entire length of the light strip 16. The light strip 16 receives its electrical power from an electrical distribution network, in particular to allow the LED arrays 18 to be activated.

The light strip 16 consists of a transceiver (not shown) configured to establish communication between the light strip 16 itself and the central processing device 30, using the telematic communication network 25. In particular, the transceiver is configured to receive an activation command for at least one LED array 18 in line with a specific article 80 selected by the user buyer 90, where the activation command comes from the central processing device 30.

In an embodiment of the system 10 according to the invention, the transceiver (not shown) of the light strip 16 is further configured to establish communication between the light strip 16 itself and the mobile processing device 50, via a short-range communication network, such as Bluetooth. In particular, the transceiver is configured to receive an activation command for at least one LED array 18 in line with a specific article 80 selected by the user buyer 90, where the activation command comes from the mobile processing device 50.

The light strip 16 consists of a number of positional codes or tags 20, each positional code or tag 20 being readable by the mobile processing device 50. The positional codes or tags 20 are basically arranged at regular intervals along the entire length of the light strip 16. Each positional code or tag 20 comprises both a unique identifier of the respective light strip 16 and a longitudinal coordinate (e.g. measurement of length) which establishes the position of the positional code or tag 20 along the light strip 16.

Therefore, reading a positional code or tag 20, using the mobile processing device 50 as mentioned above, provides both a unique identifier of the respective light strip 16 and a longitudinal coordinate, where the information of the position of the light strip 16 with a specific unique identifier has been previously registered, for example in a database.

A LED array 18 of the light strip 16 is associated with a respective positional code or tag 20 of the light strip 16.

Conversely, a positional code or tag 20 of the light strip 16 is associated with at least a respective LED array 18 of the light strip 16.

Each portion of the light strip 16, namely each LED array 18 and each positional code or tag 20 included therein, corresponds to a respective area of the shelf 14 to which the light strip 16 has been fixed, and vice versa. The positional code or tag 20 is configured to define or delimit a portion of the light strip 16, and consequently an area of the shelf 14 to which the light strip 16 has been attached. The light strip 16 is configured to identify, in particular using the respective positional code or tags 20, an area of the shelf 14 to which the light strip 16 has been attached. The light strip 16 is configured to illuminate, in particular using the respective LED arrays 18, an area of the shelf 14 to which the light strip 16 has been attached.

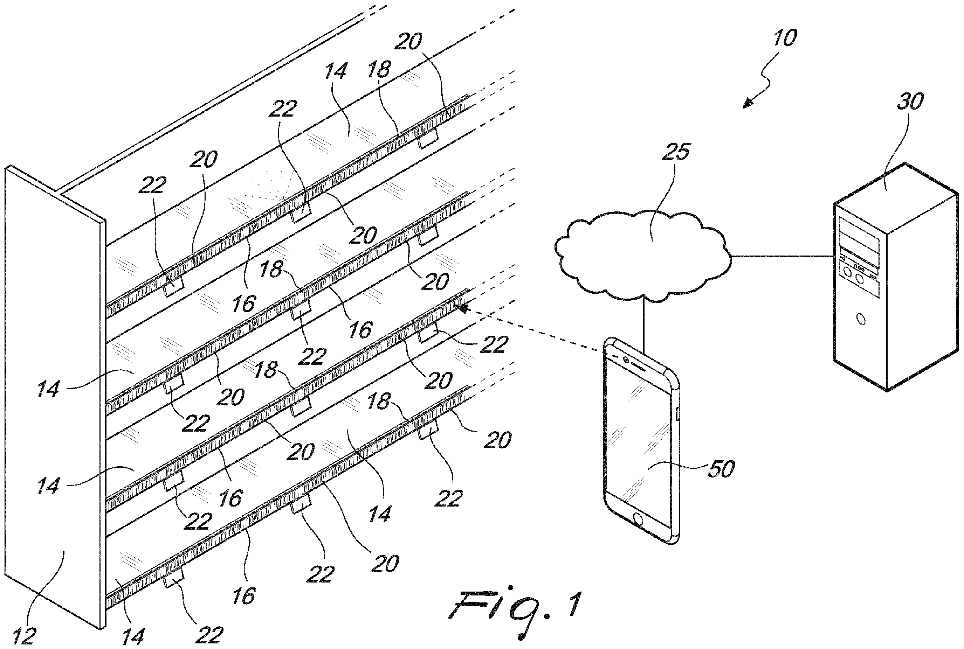

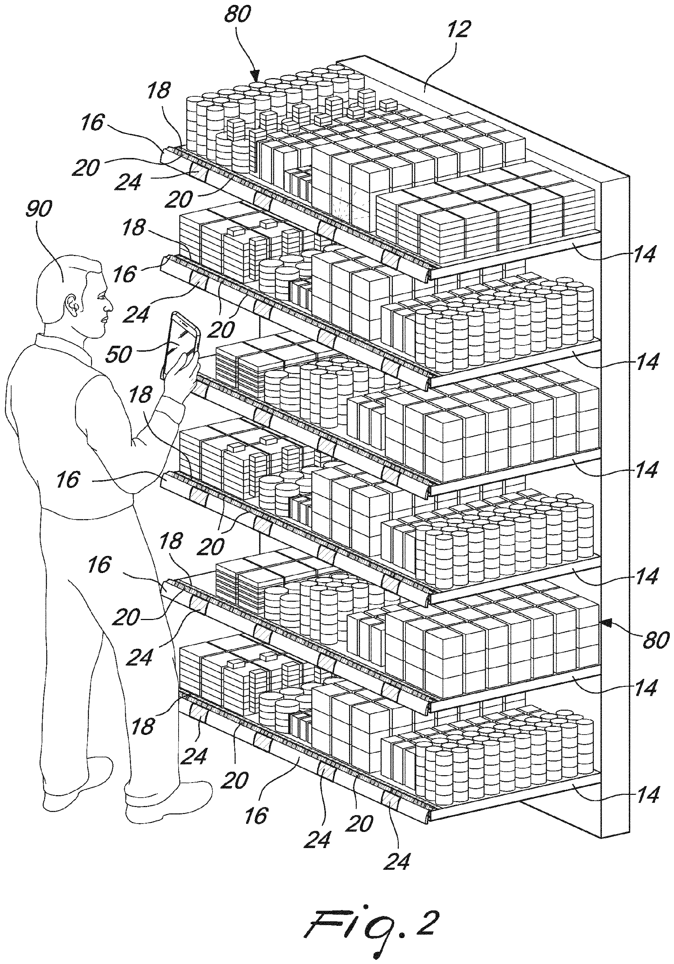

In a preferred embodiment of the system 10 according to the invention, the positional code or tag 20 comprises a static one-dimensional (ID) or two-dimensional (2D) barcode, such as a QR code (Quick Response Code, as shown in figures 1 and 2. In another embodiment of the system 10 according to the invention, the positional code or tag 20 comprises a set of alphanumeric characters or special characters. In another embodiment of the system 10 according to the invention, the positional code or tag 20 comprises an RFID tag or transponder.

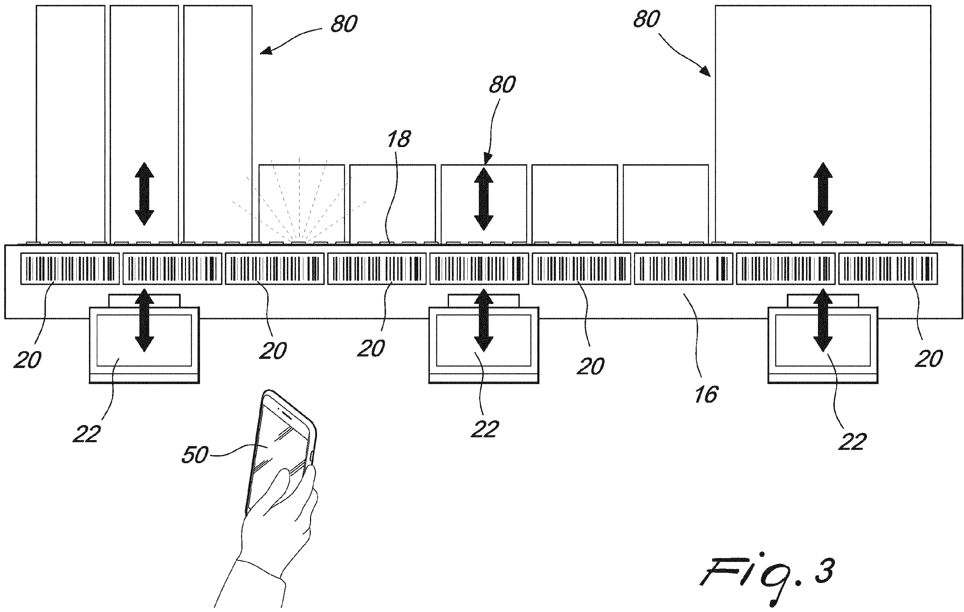

With particular reference to figures 1 and 3, in an embodiment of the invention, the system 10 for tracking the position of articles, particularly in a store, comprises a number of electronic labels 22 along the light strip 16. The electronic labels 22 can be fixed to the front edge of the shelf 14 of the shelving unit 12, preferably by means of a mount.

These electronic labels 22 are configured to display one or more pieces of information (for example name, brand, quantity, price, any discount, barcode, identification code of the electronic label, position, etc.) relating to the articles 80 on the shelf 14 in line with respective positional codes or tags 20 of the light strip 16. In an embodiment of the system 10 according to the invention, each of the electronic labels 22 is uniquely identified by a respective identification code.

With particular reference to figure 2, in an alternative embodiment of the invention, the system 10 for tracking the position of articles, particularly in a store, comprises a number of paper labels 24 along the light strip 16. The paper labels 24 can be attached to the front edge of the shelf 14 of the shelving unit 12, preferably using an adhesive.

These paper labels 24 are configured to display one or more items of information (for example name, brand, quantity, price, any discount, barcode, etc.) relating to the articles 80 on the shelf 14 in line with their respective positional codes or tags 20 of the light strip 16.

In an embodiment of the invention, the system 10 for tracking the position of articles, particularly in a store, comprises a digital graphic screen (not shown), for example LCD or OLED, connected to the light strip 16. The digital screen can be constrained to the front edge of the shelf 14 of the shelving unit 12, preferably by means of a mount base, or placed near the shelving unit 12 or in the centre of a pair of shelving units 12. These digital screens configured to display one or more pieces of information (for example name, brand, quantity, price, any discount, barcode, identification code of the electronic label, position, etc.) relating to the articles 80 on the shelf 14 in line with respective positional codes or tags 20 of the light strip 16. This digital screen can be further configured to display comparative information relating to all the articles 80 on the shelf 14.

Preferably, the digital screen is horizontal and is configured to display in a dynamic length the aforementioned one or more pieces of information relating to the articles 80 on the shelf 14 at respective codes or positional tags 20 of the light strip 16, in particular by displaying the information relating to a single article 80 along a portion of a digital screen corresponding to the area of the shelf 14 of the shelving unit 12 where the single article 80 is located. For example, if an article 80 occupies the area of shelf 14 between a code or tag "a" and a code or tag "d", the digital screen displays the information of the article 80 in the same space, i.e. between the code or tag "a" and the code or tag "d".

In an embodiment of the invention, the system 10 for tracking the position of articles, particularly in a store, comprises a number of markers (not shown) arranged along the light strip 16, in particular a marker associated with each positional code or tag 20, where these markers can be easily recognised and identified by the mobile processing device 50, in particular the relative devices for reading codes or tags 54. These markers are configured to facilitate the identification of the positional code or tag 20 of the light strip 16 by the code or tag reading devices 54. In practice, when the devices for reading the codes or tags 54 are pointed towards a light strip 16, the mobile processing device 50 recognises the presence of the marker in the acquired image and, subsequently, reads the code or positional tag 20 which is immediately next to the marker, it decodes the code or positional tag 20 and typically displays one or more pieces of information (e.g. name, brand, quantity, price, any discount, barcode, identification code of the electronic label, position, etc.) relating to the article 80 on the shelf 14 at the code or positional tag 20 of the light strip 16.

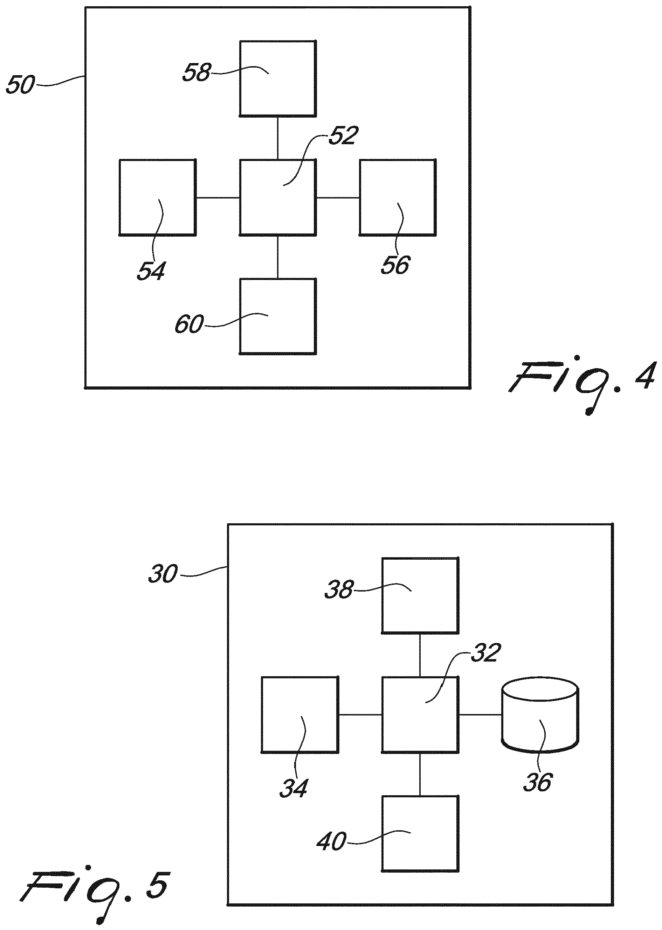

With particular reference to figure 4, the mobile processing device 50 of the system 10 for tracking the position of articles 80, particularly in a store, consists of a control unit 52, devices for reading codes or tags 54, a transceiver 56, display devices 58, and selection devices 60.

The control unit 52 is the main functional element of the mobile processing device 50, and for this reason, it is connected to and in communication with the other elements included in the mobile processing device 50. The control unit 52 of the mobile processing device 50 is equipped with suitable computing capacity for interfacing with the other elements of the mobile processing device 50, and is configured to command, control and coordinate the operation of the elements of the mobile processing 50 with which it is connected and in communication.

The devices for reading the codes or tags 54, such as for example a barcode reader or barcode scanner, of the mobile processing device 50 are configured to read or scan the positional codes or tags 20 of the light strip 16, which uniquely identify a respective area of the shelf 14 to which the light strip 16 is attached by means of the unique identifier of the same light strip 16 and the longitudinal coordinate of the positional code or tag 20. The code or tag reading devices 54 consist of an optical vision or image acquisition device, such as a camera. In an embodiment of the system 10 according to the invention, the devices for reading codes or tags 54 are configured to decode the positional code or tag 20, retrieving the unique identifier of the light strip 16 and the longitudinal coordinate of the positional code or tag 20, following the reading or scanning of the code or positional tag 20. Furthermore, the devices for reading codes or tags 54 are configured to read or scan other types of codes, for example the barcodes (or alphanumeric codes) of the articles 80 and/or the identification codes of the electronic labels 22, in particular to be able to then connect them to a respective positional code or tag 20 of the light strip 16, i.e. the unique identifier of the light strip 16 and the longitudinal coordinate of the positional code or tag 20.

The transceiver 56 of the mobile processing device 50 is configured to establish communication between the latter and the central processing device 30, via the telematic communication network 25. In an embodiment of the system 10 according to the invention, the transceiver 56 is configured to transmit a positional code or tag 20 to the central processing device 30, following the reading or scanning of the positional code or tag 20 by the code or tag reading devices 54. In an embodiment of the system 10 according to the invention, the transceiver 56 is configured to transmit the unique identifier of the light strip 16 and the longitudinal coordinate of the positional code or tag 20 to the central processing device 30, following the reading or scanning the positional code or tag 20 and the retrieval of the respective information from the latter. In an embodiment of the system 10 according to the invention, the transceiver 56 is configured to transmit the barcode of a specific article 80 of interest to the user buyer 90 to the central processing device 30, both following the selection of the article 80 by means of the selection devices 60 either by means of a voice command or following the reading or scanning of the barcode by the code or tag reading devices 54. In an embodiment of the system 10 according to the invention, the transceiver 56 is configured to receive one or more pieces of information (for example name, brand, quantity, price, any discount, barcode, identification code of the electronic label, position, etc.) relating to the articles 80 on the shelf 14 at the respective positional codes or tags 20 of the light strip 16, following the retrieval of the information by the database 36 of the central processing device 30.

In an embodiment of the system 10 according to the invention, the transceiver 56 of the mobile processing device 50 is further configured to establish a communication link between the latter and the light strip 16, via a short-range communication network, for example Bluetooth. In particular, the transceiver 56 is configured to transmit the activation command of at least one LED array 18 in line with a specific article 80 selected by the user buyer 90, the activation command being directed towards the light strip 16, following the selection of the article 80 via the selection devices 60 or a voice command of the mobile processing device 50.

Therefore, the light strip 16 is configured to interface with the mobile processing device 50 of the user buyer 90 in the phase of searching for an article 80 in the store and, once the user buyer 90 has selected the article 80 they are interested in using the mobile processing device 50, the respective LED array 18 of the light strip 16 is configured to activate, i.e. light up, in line with the selected article 80 on the shelf 14, consequently highlighting the position of the article 80.

The display devices 58, such as a screen or display, of the mobile processing device 50 are configured to display one or more pieces of information (for example name, brand, quantity, price, any discount, barcode, identification code of the electronic label, position, etc.) relating to the articles 80 on the shelf 14 in line with the respective positional codes or tags 20 of the light strip 16. In an embodiment of the system 10 according to the invention, the display devices 58 are configured to display this information relating to an article 80 following the selection of the article 80 by the user buyer 90, through the selection devices 60 of the mobile processing device 50. In an embodiment of the system 10 according to the invention, the display devices 58 are configured to display this information relating to an article 80 following the reading or scanning of the respective positional code or tag 20 and the retrieval of the respective information from the latter. The information relating to the articles 80, displayed by the display devices 58, is transmitted by the central processing device 30, where it is stored, to the mobile processing device 50, in response to the transmission by the latter of the barcode of the article 80, the respective positional code or tag 20 or the unique identifier of the light strip 16 and of the longitudinal coordinate of the positional code or tag 20.

The selection devices 60, such as a graphic touch interface or a group of buttons, of the mobile processing device 50 are configured to allow interaction between the user seller 90 or buyer and the system 10 for tracking the position of items, especially in a store. In an embodiment of the system 10 according to the invention, the selection devices 60 are configured to select a specific article 80 that is of interest to the user buyer 90 when they are searching for the article 80 in the store. In an embodiment of the system 10 according to the invention, the selection devices 60 are configured to interface with the data entry module 38 of the central processing device 30, assisting a user seller 90 in loading data and information in the database 36 of the central processing device 30, typically when stocking the shelves 14 and the arrangement of the articles 80. In an embodiment of the system 10 according to the invention, the selection devices 60 are configured to interface with the data sharing module 40 of the central processing device 30, helping a user buyer 90 in the search and selection of an article 80 they are interested in.

Advantageously, the mobile processing device 50 is configured to support the user buyer 90 in their search, selection and identification (i.e. position) of an article 80 they are interested in. In an embodiment of the system 10 according to the invention, once the user buyer 90 has selected the article 80 they are interested in, using either the selection devices 60 or a voice command, the mobile processing device 50 is configured to transmit the barcode of the article 80 selected by the user buyer 90 to the central processing device 30. In another embodiment of the system 10 according to the invention, once the user buyer 90 has selected the article 80 they are interested in, using either the selection devices 60 or a voice command, the mobile processing device 50 is configured to transmit the activation command of at least one LED array 18 in line with the article 80 selected by the user buyer 90, the activation command being directed at the light strip 16. The respective LED array 18 of the light strip 16 is configured to activate, i.e. to light up, in line with the selected article 80 on the shelf 14, consequently highlighting the position of the article 80 itself.

In an embodiment of the system 10 according to the invention, the mobile processing device 50 is further configured to retrieve the information relating to the selected article 80, including its precise position in the store, i.e. the area of the shelf 14 where it is, and to guide the user buyer 90 to the selected article 80 on the shelf 14, displaying the indications for locating the position of the respective positional code or tag 20 of the light strip 16, for example by means of the display devices 58.

In an embodiment of the invention, the system 10 further comprises a selection device (not shown) of the article 80 of interest to the buyer user, alternative to the above-mentioned mobile processing device 50, configured to support the user buyer 90 in their search, selection and identification (i.e. position) of an article 80 in the store they are interested in. The selection device comprises a transceiver, display devices, and selection devices functionally similar to those of the mobile processing device 50. In a first variant, this selection device is an interactive information totem inside the store, for example, in a corridor between a pair of shelving units 12 facing each other. In a second variant, this selection device is a tactile or touch screen inside the store, for example near a shelving unit 12 or in the centre of a pair of shelving units 12. Once the user buyer 90 has selected the article 80 they are interested in, for example using suitable selection devices or interfaces, the selection device is configured to transmit the barcode of the article 80 of interest to the user buyer 90 to the central processing device 30.

With particular reference to figure 5, the central processing device 30 of the system 10 for tracking the position of articles 80, particularly in a store, consists of a control unit 32, a transceiver 34, a database 36, a data entry module 38, and optionally a data sharing module 40.

The control unit 32 is the main functional element of the central processing device 30, and for this reason it is connected and in communication with the other elements included in the central processing device 30. The control unit 32 of the mobile processing device 30 is equipped with suitable computing capacity for interfacing with the other elements of the mobile processing device 30, and is configured to command, control and coordinate the operation of the elements of the mobile processing 30 with which it is connected and in communication.

The transceiver 34 of the central processing device 30 is configured to establish communication between the latter and the light strip 16, using the telematic communication network 25. In particular, the transceiver 34 is configured to transmit the activation command of at least one LED array 18 in line with a specific article 80 selected by the user buyer 90, the activation command being directed towards the light strip 16, following the selection of the article 80 using the selection devices 60 or a voice command of the mobile processing device 50 (e.g. an interactive information totem or else a tactile or touch screen).

Therefore, the light strip 16 is configured to interface with the mobile processing device 30 in the phase of searching for an article 80 in the store and, once the user buyer 90 has selected the article 80 they are interested in using the mobile processing device 50 or the selection device, the respective LED array 18 of the light strip 16 is configured to activate, i.e. light up, in line with the selected article 80 on the shelf 14, consequently highlighting the position of the article 80. The transceiver 34 of the central processing device 30 is further configured to establish communication between the latter and the mobile processing device 50, using the telematic communication network 25. In an embodiment of the system 10 according to the invention, the transceiver 34 is configured to transmit a positional code or tag 20 to the central processing device 50, following the reading or scanning of the positional code or tag 20 by the code or tag reading devices 54. In an embodiment of the system 10 according to the invention, the transceiver 34 is configured to transmit the unique identifier of the light strip 16 and the longitudinal coordinate of the positional code or tag 20 coming from the central processing device 50, following the reading or scanning of the positional code or tag 20 and the retrieval of the respective information from the latter. In an embodiment of the system 10 according to the invention, the transceiver 34 is configured to receive the barcode of a specific article 80 of interest to the user buyer 90 coming from the central processing device 50, both following the selection of the article 80 by means of the selection devices 60 or else by means of a voice command as well as following the reading or scanning of the barcode by the code or tag reading devices 54. In an embodiment of the system 10 according to the invention, the transceiver 34 is configured to transmit to the mobile processing unit 50 one or more pieces of information (for example name, brand, quantity, price, any discount, barcode, identification code of the electronic label, position, etc.) relating to the articles 80 on the shelf 14 at the respective positional codes or tags 20 of the light strip 16, following the retrieval of the information from the database 36. In particular, the transceiver 34 is configured to transmit the information relating to the selected article 80 to the mobile processing device 50, including its precise position in the store, i.e. the area of the shelf 14 where it can be found.

The database 36 of the central processing device 30, for example a database stored on suitably sized storage media, is configured to store the identification codes of all the light strips 16 associated with the positions of the respective shelves 14 of the store, to which the aforesaid light strips 16 are connected.

Therefore, the database 36 contains the information regarding the position (for example in which shelving unit 12 and on which shelf 14) in the store where the light strip 16 is located with a specific identification code. Furthermore, the database 36 is configured to store the information (for example name, brand, quantity, price, any discount, barcode, identification code of the electronic label, position, etc.) of all the articles 80 on the shelves 14 in the store.

The database 36 is configured to store information associating an article 80, typically uniquely identified by the respective barcode, and the area of the shelf 14 on which the article 80 has been placed, uniquely identified by the respective code or tag 20 of the light strip 16, i.e. from the pair comprising the identification code of the light strip 16 associated with the shelf 14, whose position in the store is known, as well as the longitudinal coordinate that fixes the position of the positional code or tag 20 along the light strip 16. Therefore, this association information pairs an article 80 and the area of the shelf 14 on which the article 80 has been placed, through the respective identification codes of the two elements.

In an embodiment of the system 10 according to the invention, the database 36 is configured to store information associating an article 80, typically uniquely identified by the respective barcode, the area of the shelf 14 on which the Article 80 has been placed, uniquely identified by the respective positional code or tag 20 of the light strip 16, and the electronic label 22, uniquely identified by the respective identification code. Therefore, this information associates an article 80, the area of the shelf 14 on which the article 80 has been placed and the electronic label 22 relating to the article 80, through the respective identification codes of the three elements.

The data entry module 38 of the central processing device 30 is configured to load the data and information into the database 36, typically during the stacking of the shelves 14 when the articles 80 are being positioned. The database 38 is configured to store information associating an article 80, typically uniquely identified by the respective barcode, and the area of the shelf 14 on which the article 80 has been placed, uniquely identified by the respective code or tag 20 of the light strip 16, i.e. from the pair comprising the identification code of the light strip 16 coupled to the shelf 14, whose position in the store is known, as well as the longitudinal coordinate that fixes the position of the positional code or tag 20 along the light strip 16.

Therefore, this association information pairs an article 80 and the area of the shelf 14 on which the article 80 has been placed, through the respective identification codes of the two elements.

Furthermore, we recall that a positional code or tag 20 of the light strip 16 is associated with a respective LED array 18 of the light strip 16, therefore this information also pairs an article 80 and the LED array 18 in line with the article 80 on the shelf 14.

In an embodiment of the system 10 according to the invention, the database 38 is configured to store information associating an article 80, typically uniquely identified by the respective barcode, the area of the shelf 14 on which the article 80 has been placed, uniquely identified by the respective positional code or tag 20 of the light strip 16, and the electronic label 22, uniquely identified by the respective identification code. Therefore, this information associates an article 80, the area of the shelf 14 on which the article 80 has been placed and the electronic label 22 relating to the article 80, through the respective identification codes of the three elements.

In a preferred embodiment of the system 10 according to the invention, the data entry module 38 is controlled by the user seller or buyer 90 indirectly via the mobile processing device 50, in particular the relative display devices 58 and selection devices 60; in this case, the data entry module 38 is configured to interface with the mobile processing device 50, for example a smartphone or tablet, of the user seller 90 in loading data and information into the database 36 of the processing device central 30, typically during the stocking of the shelves 14 and positioning of the articles 80. In another embodiment of the system 10 according to the invention, the data entry module 38 is controlled by the user seller or buyer 90 directly using the central processing device 30.

Preliminarily, an installer pairs at least one longitudinal luminous strip 16 to at least one shelf 14, for example a shelving unit 12 or a shop display, and loads into the database 36, using the data entry module 38, the identification codes of all the light strips 16 associated with the positions of the respective shelves 14 of the store, to which the aforementioned light strips 16 are paired.

This operation, carried out only once and upon installation of the light strips 16, allows you to store the information of the position (for example in which shelving unit 12 and on which shelf 14) in the store where the light strip 16 with a specific identification code is.

When the operator of the store, i.e. the user seller 90, places an article 80 on the shelf 14 of a shelving unit 12 or a display case, they scan the barcode of the article 80, the positional code or tag 20 of the strip light 16, corresponding to the area of the shelf 14 on which the article 80 has been placed, and the identification code of any electronic label 22 using the mobile processing device 50, in particular the devices for reading the codes or tags 54.

At this point, the mobile processing device 50 sends the respective identification codes of the two or three elements to the central processing device 30, in particular the data entry module 38, via the transceiver 56.

By combining this input information, i.e. the respective identification codes of the two or three elements, the data entry module 38 generates the aforementioned association information for the article 80, the area of the shelf 14 on which the article 80 has been placed and any electronic label 22. In practice, using at least one photograph, it is possible to associate article 80, its position in the store and any electronic label 22, and advantageously it is possible to automatically update the electronic label 22.

The data sharing module 40 of the central processing device 30 is configured to interface with the mobile processing device 50, for example a smartphone or tablet, of the user buyer 90 in the search and selection of an article 80 in the store, sharing one or more pieces of information (for example name, brand, quantity, price, any discount, barcode, identification code of the electronic label, position, etc.) relating to the articles 80 on the shelf 14, in line with the respective positional code or tag 20 of the light strip 16, following the retrieval of the information by the database 36. In particular, the transceiver 40 is configured to transmit the information relating to the selected article 80 to the mobile processing device 50, including its precise position in the store, i.e. the area of the shelf 14 where it can be found.

As already mentioned, once the user buyer 90 has selected the article 80 they are interested in, using the selection devices 60 or a voice command of the mobile processing device 50 or using the selection device (e.g. a totem or a touch screen), the central processing device 30 is configured to transmit the activation command of at least one LED array 18 in line with the article 80 selected by the user buyer 90, the activation command being directed towards the light strip 16. The respective LED array 18 of the light strip 16 is configured to activate, i.e. to light up, in line with the selected article 80 on the shelf 14, consequently highlighting the position of the article 80 itself.

In practice, it has been observed that the invention fully achieves the intended aims and objects. In particular, it has been seen how the system for tracking the position of articles thus conceived, particularly in a store, allows the qualitative limits of the prior art to be overcome, as it is extremely accurate and thus allows both the seller (for example for managing the stocking of the shelf) and the buyer to know exactly where the products they are interested in are, particularly in a store, for example on the shelves.

An advantage of the system for tracking the position of articles, particularly in a store, according to this invention consists in the fact that it allows you to increase the convergence between the physical store and the virtual store, consequently increasing the degree of interactivity and the management of the planogram and information of the items by a seller and the buying experience of the buyer in a physical store, or more generally in a physical place.

Another advantage of the system for tracking the position of articles, particularly in a store, according to this invention consists in the fact that it allows you to facilitate the management of the information of the articles in the physical store, or more generally in the physical place, and the location of the items within the physical store, or more generally in the physical location, to subsequently allow them to be searched for quickly and located.

A further advantage of the system for tracking the position of articles, particularly in a store, according to this invention, consists in the fact that it allows you to speed up the exchange of information relating to the products inside a physical store, or more generally within a physical place.

Another advantage of the system for tracking the position of articles, particularly in a store, according to this invention consists in the fact that it allows you to keep the shelving units in order, in particular their shelves, while at the same time giving the buyer information about the products, designed to encourage their purchase.

Furthermore, an advantage of the system for tracking the position of articles, particularly in a store, according to this invention consists in the fact that it is simple and quick to use, namely user-friendly.

Although the system for tracking the position of articles according to the invention was designed in particular for the management and possible sharing of information relating to the position of various commercial products on the shelves of a sales outlet, in short inside a store, it can still be used, more generally, for the management and eventual sharing of information relating to the position of any item placed in any space, such as a library, a warehouse, and so on.

The invention, thus conceived, is open to numerous modifications and variations, all of which are within the scope of the inventive concept. Furthermore, all the elements may be replaced by other technically equivalent elements. In practice, the materials used could be of any type, so long as they are compatible with the specific use, as well as the contingent shapes and dimensions, according to requirements and the state of the art. In conclusion, the protection provided for the claims must not be limited by the preferred illustrations or embodiments set out in the description in the form of examples, but rather the claims must include all the patentable novelties residing in this invention, including all the characteristics that would be treated as equivalent by a person skilled in the art.

## Claims

1. A system (10) for tracking the position of articles (80), particularly in a retail outlet, comprising at least one shelf (14) extending longitudinally suitable for supporting and displaying said articles (80), a central processing device (30) and a mobile processing device (50) operated by a user (90), where said central processing device (30) and said mobile processing device (50) are mutually connected and communicating by means of a telematic communication network (25); **characterised by** the fact that it comprises a longitudinal light strip (16) coupled to said at least one shelf (14) and parallel to a longitudinal axis of said at least one shelf (14), where said light strip (16) consists of a number of LED arrays (18), one LED array (18) comprising one or more LEDs, and a transceiver configured to receive an activation command of at least one LED array (18) which arrives from said central processing device (30), via said telematic communication network (25), said light strip (16) consisting of a number of positional codes (20), each positional code (20) comprising an identifier of said light strip (16) and a longitudinal coordinate which defines the position of said positional code (20) along said light strip (16), said positional code (20) of said light strip (16) being associated with at least one respective LED array (18) of said light strip (16); said mobile processing device (50) comprises code reading devices (54) configured to read or scan both said positional code (20) of said light strip (16) associated with said at least one shelf (14) and a barcode of an article (18), and a transceiver (56) configured to transmit both said positional code (20) and said barcode of said article (80) to said central processing device (30); and said central processing device (30) consists of a data entry module (38) configured to generate an information item for association between said article (80), identified uniquely by said respective barcode, and an area of said at least one shelf (14) on which said article (80) has been positioned, identified uniquely by said positional code (20) comprising said identification code of said light strip (16) paired with said at least one shelf (14) and said longitudinal coordinate which defines the position of said positional code (20) along said light strip (16), and a transceiver (34) configured to transmit said activation command of at least one LED array (18) to said light strip (16), via said telematic communication network (25), following the selection of said article (80) by means of said mobile processing device (50) or a selection device.

2. A system (10) for tracking the position of articles (80) according to claim 1, **characterised by** the fact that said positional codes (20) of said light strip (16) comprise a one-dimensional or two-dimensional barcode of the static type, or a set of alphanumeric characters or special characters.

3. A system (10) for tracking the position of articles (80) according to claim 1 or 2, **characterised by** the fact that it comprises, furthermore, a number of electronic tags (22) along said light strip (16), where said electronic tags (22) are configured to display one or more pieces of information related to said articles (80) on said at least one shelf (14) in line with respective positional codes (20) of said light strip (16).

4. A system (10) for tracking the position of articles (80) according to claim 3, **characterised by** the fact that said electronic tags (22) are identified uniquely by respective identification codes, where said code reading devices (54) of said mobile processing device are furthermore configured to read or scan said identification codes of said electronic tags (22), said data entry module (38) being further configured to generate said association information for said article (80), identified uniquely by said respective barcode, said area of said at least one shelf (14) on which said article (80) has been positioned, identified uniquely by said positional code (20) comprising said identification code of said light strip (16) paired with said at least one shelf (14) and said longitudinal coordinate which defines the position of said positional code (20) along said light strip (16), and an electronic tag (22), identified uniquely by a respective identification code.

5. A system (10) for tracking the position of articles (80) according to any one of the preceding claims, **characterised by** the fact that it further comprises a digital graphic display associated with said light strip (16), where said graphical digital display is configured to display one or more items of information items related to said articles (80) on said at least one shelf (14) in line with respective positional codes (20) of said strip (16).
